# EUROPÄISCHE PATENTSCHRIFT

(11) **EP 1 619 428 B1**
(45) Veröffentlichungstag und Bekanntmachung des Hinweises auf die Patenterteilung: **07.05.2008**
(21) Anmeldenummer: 05013876.7
(22) Anmeldetag: 28.06.2005
(51) Int. Cl.: F16J 15/12, F16J 15/06, B21D 53/20

(54) **Verfahren zur Herstellung von Trägerelementen für Elastomerdichtungen**
Methof for manufacturing support elements for elastomeric seals
Procédé de fabrication des élements de support pour des joints d'étanchéité en élastomère

(30) Priorität: 21.07.2004 DE 102004035285
(43) Veröffentlichungstag der Anmeldung: 25.01.2006
(73) Patentinhaber: Federal-Mogul Sealing Systems Bretten GmbH, 75015 Bretten (DE)
(72) Erfinder: Salameh, Ralf, 75053 Gondelsheim (DE)

(56) Entgegenhaltungen:
- EP-A- 0 455 579
- EP-A- 0 900 929
- EP-A- 1 033 512
- DE-A1- 19 922 484
- DE-C1- 4 312 629

## Beschreibung

Die Erfindung betrifft ein Verfahren zur Herstellung eines Trägerelements für eine Elastomerdichtung gemäß dem Oberbegriff des Anspruchs 1, indem ein Grundkörper oder Segmente für einen Grundkörper durch Stanzen erzeugt werden.

Dichtungen besitzen heute meist metallische als Trägerrahmen ausgebildete Trägerelemente, die mit Elastomer umspritzt sind oder an die Elastomer anvulkanisiert wird. Diese Trägerrahmen werden in der Serienproduktion im Stanzverfahren hergestellt. Hierbei entsteht in vielen Fällen ein nicht unerheblicher Stanzabfall. Als Trägerrahmen von Dichtungen sind überwiegend Aluminium- und Stahlbleche im Einsatz. Da die Dichtungen meist Geometrien mit großen Freiräumen im Inneren besitzen, bedeutet dies beim Stanzen, dass diese Innenbereiche in der Regel als Abfall entstehen. Zur Vermeidung dieses Stanzabfalls wird der Rahmen vielfach in mehreren einzelnen Segmenten vorgesehen, die zur Bildung eines Rahmens bedarfsweise wieder gefügt werden.

Durch die DE-A 199 22 484 ist eine Flachdichtung bekannt geworden, die in zwei Schritten hergestellt wird, nämlich einem ersten Schritt, bei dem aus einer Metallplatte bzw. einem Metallblech ein Rohling des Metallträgers ausgestanzt wird, bei dem die flächenhaften Abschnitte zunächst nur durch einen schmalen länglichen Öffnungsbereich voneinander getrennt sind. Dieser Rohling weist demnach zunächst noch nicht die den vorgesehenen inneren Öffnungsbereich der Flachdichtung auf. Die endgültige Formgebung der Flachdichtung wird nun dadurch erreicht, dass durch Verformen von sogenannten verformbaren Bereichen die flächenhaften Abschnitte in einer Weise auseinandergebogen werden, dass der Metallträger insgesamt an die vorgesehene Endform gebracht wird.

Der DE-C 43 12 629 ist eine Elastomerdichtung zur Abdichtung zwischen Ölwanne und Motorblock einer Brennkraftmaschine zu entnehmen, beinhaltend eine versteifende Blecheinlage, die in mehrere Segmente unterteilt und in Elastomermaterial eingeformt ist sowie im Bereich von Durchlassbohrungen für Schrauben Verpressungsbegrenzer aufweist, wobei die Segmente Längssegmente mit Abkröpfungen an ihren einen Enden umfassen, mit denen sie die anderen Enden benachbarter Längssegmente überlappen.

In der DE-A 197 12 109 wird eine Gummiformdichtung abgehandelt, mit mehreren insbesondere randoffenen Montageöffnungen für Befestigungsmittel und mit einem Träger, der mindestens abschnittsweise mit einem Gummimaterial umspritzt ist, wobei der Träger aus einem oder mehreren geformten Drahtstücken erzeugt ist.

Die EP-A-0 455 579 offenbart eine Dichtung, deren träger aus Blechmetrial besteht. Diese Tragelemente wurden als mehrteilige Trägerelemente ausgestanzt und können beispielsweise L-förmig oder U-förmig ausgebildet sein. Zur Herstellung der endgültigen Form wurden die einzelnen Trägerelemente anschließend zusammengeschweißt.

Der Erfindung liegt die Aufgabe zugrunde, ein Verfahren zur Erzeugung eines Trägerelementes für eine Elastomerdichtung bereitzustellen, das gegenüber aus Blechen ausgestanzten Trägerelementen eine weitere Materialeinsparung mit sich bringt.

Diese Aufgabe wird durch die Merkmalskombination des Anspruchs 1 gelöst.

Vorteilhafte Weiterbildungen des erfindungsgemäßen Verfahrens sind den Unteransprüchen zu entnehmen.

Abweichend vom herkömmlichen Stanzverfahren wird nun ein der maximalen Breite des Grundkörpers oder der Segmente entsprechendes schmales aufgewickeltes Band eingesetzt, das verschiedene hintereinander geschaltete, und CNC gesteuerte Stanzprozesse durchläuft. Die jeweiligen Stanzprozesse sind hierbei einzeln ansteuerbar. Je nach zu erzeugendem Lochbild des zu erzeugenden Trägerrahmens werden in den Grundkörper bzw. die Segmente in den hintereinander geschalteten Stanzprozessen die jeweiligen Anschnitte oder Löcher erzeugt.

Bedarfsweise können Freistanzungen in den Grundkörper bzw. das jeweilige Segment eingebracht werden, wodurch ein späterer Biegevorgang erleichtert wird. Bedarfsweise können die einander gegenüberliegenden Enden des gebogenen Grundkörpers bzw. der zusammengesetzten Segmente mit bekannten Fügeverfahren verbunden werden.

Durch das erfindungsgemäße Verfahren wird ein geschlossenes oder auch offenes, bedarfsweise jeweils auch nur aus Segmenten bestehendes Trägerelement mit definierter Geometrie aus einem schmalen Band mit minimalem Stanzabfall gefertigt. Das Verfahren eignet sich besonders, wenn die Breite des Trägerelementes umlaufend identisch ist und die Geometrien, wie z.B. Durchmesser oder andere Elemente sich wiederholen.

Das Verfahren kann bei allen metallischen Trägerelementen angewendet werden, eventuell auch bei anderen Materialien, wie z.B. Kunststoff.

Das erfindungsgemäße Verfahren wird im folgenden anhand eines Ausführungsbeispieles beschrieben. Es zeigen:
- Figuren 1a bis c: Darstellung des Verfahrensablaufs zur Herstellung eines aus einem Band erzeugten rahmenartig ausgebildeten Trägerelementes;
- Figur 2: Trägerelement gemäß Figur 1c in gebogener Form.

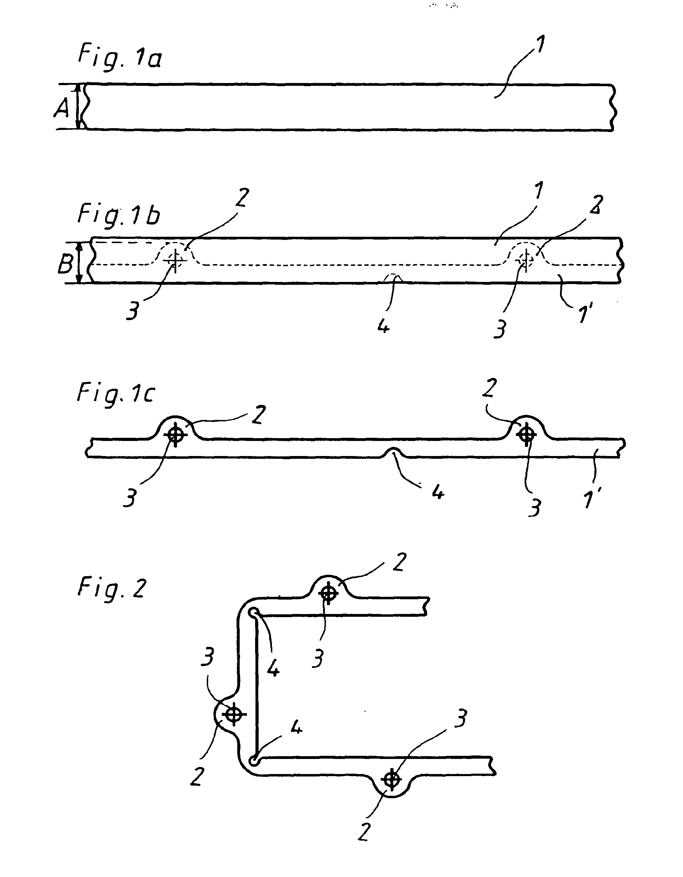

Die Figuren 1a bis c zeigen ein, in diesem Beispiel aus Aluminium bestehendes Metallband 1, aus welchem ein Trägerelement gefertigt werden soll. Gemäß Figur 1a hat das Metallband 1 die Breite A. Aus diesem Metallband 1 wird nun ein Grundkörper 1' herausgestanzt, der gemäß Figur 1b eine Grundbreite B hat und der die in Figur 1c dargestellte Geometrie aufweist. Durch hintereinander geschaltete, vorzugsweise CNC gesteuerte, Stanzprozesse können einerseits die Anformungen 2 und andererseits die Lochbilder 3 erzeugt werden. Es gilt die Gleichung A > B, wobei der Stanzabfall gering gehalten wird.

Bedarfsweise können noch Freistanzungen 4 an vorgebbaren Stellen des Metallbandes 1 eingebracht werden, durch welche ein späterer Biegevorgang des Grundkörpers 1' erleichtert wird.

Je nach Ausgestaltung des Grundkörpers 1' bzw. einzelner Segmente zur Erzeugung eines Grundkörpers 1' entspricht die Bandbreite A im wesentlichen der maximalen Breite B des Grundkörpers 1'. Sind Anformungen 2 zu berücksichtigen, ist die Breite in entsprechender Weise anzupassen.

Figur 2 zeigt den Grundkörper 1', wie er aus dem in Figur 1 dargestellten Metallband 1 in verschiedenen Stanzprozessen erzeugt wurde. Im Bereich der Freistanzungen 4 wurde der Grundkörper 1 in der dargestellten Weise gebogen. Die Anformungen 2 samt Lochungen 3 weisen nach außen. Bedarfsweise können die hier nicht erkennbaren Enden des Grundkörpers 1' durch bekannte Fügeverfahren miteinander verbunden werden. Der Grundkörper 1' bildet nun das rahmenartig ausgebildete Trägerelement für eine zu erzeugende Elastomerdichtung.

## Patentansprüche

1. Verfahren zur Herstellung eines Trägerelementes für eine Elastomerdichtung, indem ein Grundkörper (1') oder Segmente für einen Grundkörper (1') durch Stanzen erzeugt werden, wobei der Grundkörper (1') oder die Segmente für den Grundkörper (1') mit vorgebbarer Geometrie aus einem Band hergestellt werden, **dadurch gekennzeichnet dass**, ein aufgewickeltes Band eingesetzt wird welches im wesentlichen der maximalen Breite (B) des Grundkörpers (1') oder der Segmente entspricht und das Band zur Erzeugung des Grundkörpers (1')oder der Segmente hintereinander geschaltete CNC gesteuert Stanzprozesse durchläuft, wobei die Stanzprozesse einzeln angesteuert werden.

2. Verfahren nach Anspruch 1, **dadurch gekennzeichnet, dass** in den Grundkörper (1') oder zumindest in einzelne der Segmente Freistanzungen (4) eingebracht werden, wobei der Grundkörper (1') oder das jeweilige Segment in eine vorgegebene geometrische Form gebogen wird.

3. Verfahren nach einem der Ansprüche 1 bis 2, **dadurch gekennzeichnet, dass** die einander gegenüberliegenden Enden des gebogenen Grundkörpers (1') oder der Segmente miteinander verbunden werden.

4. Verfahren nach einem der Ansprüche 1 bis 3, **dadurch gekennzeichnet, dass** der Grundkörper (1') oder die Segmente aus einem aus Metall oder Kunststoff bestehenden durchlaufenden Band (1) ausgestanzt werden.

## Claims

1. Method for producing a support element for an elastomeric seal, wherein a base body (1') or segments for a base body (1') are created by punching, wherein the base body (1') or the segments for the base body (1') are made with a pre-defined geometry from a band, **characterised in that** a wound band is used which substantially corresponds to the maximum width (B) of the base body (1') or the segments and, in order to create the base body (1') or the segments, the band passes through sequential CNC-controlled punching processes, wherein the punching processes are individually controlled.

2. Method according to claim 1, **characterised in that** free spaces (4) are introduced into the base body (1') or at least into individual segments, whereby the base body (1') or the respective segment is bent into a pre-determined geometric form.

3. Method according to one of the claims 1 or 2, **characterised in that** the mutually opposing ends of the bent base body (1') or of the segments can be connected to one another.

4. Method according to one of the claims 1 to 3, **characterised in that** the base body (1') or the segments are punched out of a continuous band (1) made from metal or plastics.

## Revendications

1. Procédé de fabrication d'un élément de support affecté à une garniture d'étanchement en élastomère, dans lequel un corps de base (1'), ou des segments destinés à un corps de base (1'), est (sont) produit(s) par poinçonnage, le corps de base (1'), ou les segments destinés audit corps de base (1'), étant produit(s) à partir d'une bande avec géométrie pouvant être préétablie, **caractérisé par** l'utilisation d'une bande enroulée correspondant, pour l'essentiel, à la largeur maximale (B) du corps de base (1') ou des segments, ladite bande étant soumise, pour produire ledit corps de base (1') ou lesdits segments, à des processus de poinçonnage effectués en succession par commande CNC, lesdits processus de poinçonnage étant pilotés individuellement.

2. Procédé selon la revendication 1, **caractérisé par le fait que** des contre-dépouilles poinçonnées (4) sont pratiquées dans le corps de base (1'), ou au moins dans des segments individuels, ledit corps de base (1'), ou le segment considéré, étant coudé à une forme géométrique préétablie.

3. Procédé selon l'une des revendications 1 à 2, **caractérisé par le fait que** les extrémités opposées du corps de base (1') coudé, ou des segments, sont reliées les unes aux autres.

4. Procédé selon l'une des revendications 1 à 3, **caractérisé par le fait que** le corps de base (1'), ou les segments, est (sont) poinçonné(s) à partir d'une bande (1) en défilement, constituée d'un métal ou d'une matière plastique.
